# EUROPÄISCHE PATENTSCHRIFT

(11) **EP 1 234 689 B1**
(45) Veröffentlichungstag und Bekanntmachung des Hinweises auf die Patenterteilung: **26.04.2006**
(21) Anmeldenummer: 02002492.3
(22) Anmeldetag: 02.02.2002
(51) Int. Cl.: B60B 3/00, B60B 3/14, B60B 3/16

(54) **Rad für ein Kraftfahrzeug aus einer magnesiumhaltigen Legierung**
Vehicle wheel of aluminium based alloy
Roue pour véhicule en alliage à base d'aluminium

(30) Priorität: 27.02.2001 DE 10109386
(43) Veröffentlichungstag der Anmeldung: 28.08.2002
(73) Patentinhaber: BBS Motorsport & Engineering GmbH, 77757 Schiltach (DE)
(72) Erfinder: Wurft, Jörg, 77761 Schiltach (DE)
(74) Vertreter: Patentanwälte Westphal, Mussgnug & Partner

(56) Entgegenhaltungen:
- EP-A- 0 607 417
- DE-A- 2 207 771
- DE-C- 4 306 484

## Beschreibung

Die Erfindung betrifft ein Rad für ein Kraftfahrzeug aus einer magnesiumhaltigen Legierung gemäß Oberbegriff des Anspruchs 1.

Leichtmetallräder für Kraftfahrzeuge erfreuen sich zunehmender Beliebtheit, da sie neben einem gesteigerten ästhetischen Gesamterscheinungsbild des Kraftfahrzeugs auch technische Vorteile bieten, die aus dem reduzierten Gewicht im Vergleich zu herkömmlichen Rädern aus Stahl herrühren. Zunehmend werden Leichtmetallräder auch aus magnesiumhaltigen Legierungen gefertigt, um eine weitergehende Gewichtsreduzierung zu erreichen.

Im einfachsten Fall ist das Rad einteilig gefertigt und besteht somit vollständig aus einer magnesiumhaltigen Legierung. Für höhere Ansprüche, speziell beim Einsatz an Rennsportfahrzeugen oder an Fahrzeugen der Oberklasse, finden sich zunehmend auch mehrteilige Räder, bei denen bestimmte Abschnitte, den mechanischen Anforderungen entsprechend, aus unterschiedlichen Legierungen bestehen. Die nachstehende Erfindung bezieht somit auch solche Räder ein, bei denen die Radschüssel, oder zumindest deren Zentralbereich, aus einer magnesiumhaltigen Legierung bestehen.

Obwohl sich derartige Räder infolge ihres geringen Gewichts bestens bewährt haben, tritt in der Praxis, insbesondere im Alltagseinsatz von straßenzugelassenen Kraftfahrzeugen, das Problem der Kontaktkorrosion auf. Dies betrifft einerseits den Anlagebereich des Rades an der Bremsscheibe, die zumindest derzeit noch überwiegend aus Stahl gefertigt ist. Andererseits werden zur Befestigung des Rads weiterhin Stahlschrauben verwendet, so daß insbesondere im Anlagebereich des Schraubenkopfes Kontaktkorrosion auftritt. Speziell dort ist diese unerwünscht, da sie zusätzlich das optische Erscheinungsbild nachhaltig beeinträchtigt. Gerade hierauf wird jedoch beim Kauf derartiger Räder besonderer Wert gelegt.

Aus der DE-C-43 06 484, von der die Erfindung ausgeht, ist es bekannt, zur Vermeidung von Kontaktkorrosion bei Magnesiumrädern im Bereich der Radanlage Aluminiumringe in Form einer ringförmigen Platte sowie Neben-Anlageflächen in Form von Ringen mit angenähert quadratischem Querschnitt in das Magnesiumrad einzugießen. Die Ringe werden hierzu als Einzelteile vorgefertigt und anschließend in das Rad integriert.

Der Erfindung lag deshalb das Problem zugrunde, ein Rad der eingangs genannten Art derart weiterzuentwickeln, daß es die beschriebenen Nachteile nicht mehr aufweist. Insbesondere sollte das Problem der Kontaktkorrosion zuverlässig gelöst werden, ohne die Eigenschaften des Rades als solches und dessen Handhabung, insbesondere bei der Montage, zu beeinträchtigen.

Gelöst wird dieses Problem durch ein Rad mit den Merkmalen des Anspruchs 1.

Vorteilhafte Ausführungsformen der Erfindung sind durch die Merkmale der Unteransprüche angegeben.

Die Erfindung basiert auf der Idee, in den korrosionsgefährdeten Bereichen Abstandshalter vorzusehen, die zuverlässig einen unmittelbaren Kontakt zwischen dem betreffenden Abschnitt aus einer magnesiumhaltigen Legierung und dem Bauteil aus Stahl, also den Befestigungsschrauben, der Nabe und der Bremsscheibe, zu verhindern. Die Abstandshalter sind somit im Bereich der Befestigungsbohrungen, der Nabenbohrung sowie der Anlagefläche für die Bremsscheibe angebracht, so daß ein unmittelbarer Kontakt zuverlässig verhindert wird.

Erfindungsgemäß sind die Distanzscheibe und die Distanzhülse als einteiliges, vorzugsweise einstückiges, flanschartiges Bauteil gestaltet. Dies vereinfacht die Anbringung der Abstandshalter am Zentralbereich des Rads, da sowohl der Nabenbereich als auch der Anlagebereich an die Bremsscheibe durch ein einziges Bauteil abgedeckt werden können. Darüberhinaus wird die Distanzscheibe in Bezug auf das Rad selbsttätig zentriert, gesonderte Zentrierhilfsmittel sind somit nicht erforderlich.

Im Bereich der Befestigungsbohrungen sind weitere Abstandshalter vorgesehen. Bevorzugt werden Distanzbuchsen verwendet, die die Befestigungsbohrungen in axialer Richtung durchsetzen. Die Distanzbuchsen weisen zur Außenseite des Rads hin einen trichterförmigen Axialabschnitt mit einem sphärischen Anlagebereich für den Kopf der Radschraube auf. Damit ist sichergestellt, daß auch der Kopf der Radschraube nicht in unmittelbarem Kontakt mit dem Rad gelangt. Mit Hilfe dieser Abstandshalter gelingt es auf einfache und zuverlässige Art und Weise, das Problem der Kontaktkorrosion zwischen den magnesiumhaltigen Bauteilen des Rads und den stahlhaltigen Bauteilen, wie den Befestigungsschrauben, der Radanlage im Nabenbereich und der Bremsscheibe, zu unterbinden.

Es ist von Vorteil, die Distanzbuchsen in den Befestigungsbohrungen unverlierbar zu fixieren. Unter fertigungstechnischen Gesichtspunkten hatte es sich als besonders vorteilhaft erwiesen, die Distanzbuchsen in die Befestigungsbohrungen einzupressen.

Alternativ oder zusätzlich hierzu können einzelne oder alle Distanzbuchsen mit der Distanzscheibe verbunden sein, so daß insbesondere im Falle der einstückigen Ausbildung von Distanzscheibe und Distanzbuchse sich ein unverlierbarer Verbund der Abstandshalter realisieren läßt.

Eine Variante sieht vor, die Distanzbuchsen zur Radinnenseite hin durch korrespondierende Bohrungen, die an der Distanzscheibe vorgesehen sind, hindurchzuführen und auf der Radinnenseite mit der Distanzscheibe zu verbinden.

Eine besonders einfache Möglichkeit hierfür besteht darin, die Distanzbuchsen mit Bördelrändern zu versehen, die nach dem Aufsetzen der Distanzscheibe radial auswärts aufgebördelt werden. Es entsteht somit eine formschlüssige Verbindung zwischen den Distanzbuchsen und der Distanzscheibe, die eine sichere und unverlierbare Anbringung der Abstandshalter am Rad ermöglicht.

Es versteht sich von selbst, daß die Durchgangsbuchsen nach dem Umlegen des Bördelrandes die Distanzscheibe in axialer Richtung nicht überragen dürfen, damit eine vollflächige Anlage zwischen Rad bzw. Distanzscheibe und dem korrespondierenden Bremsscheibenbereich sichergestellt ist. Hierfür ist im Bereich der Durchgangsbohrungen ein Absatz vorgesehen, der so dimensioniert ist, daß er den Bördelrand vollständig aufnehmen kann.

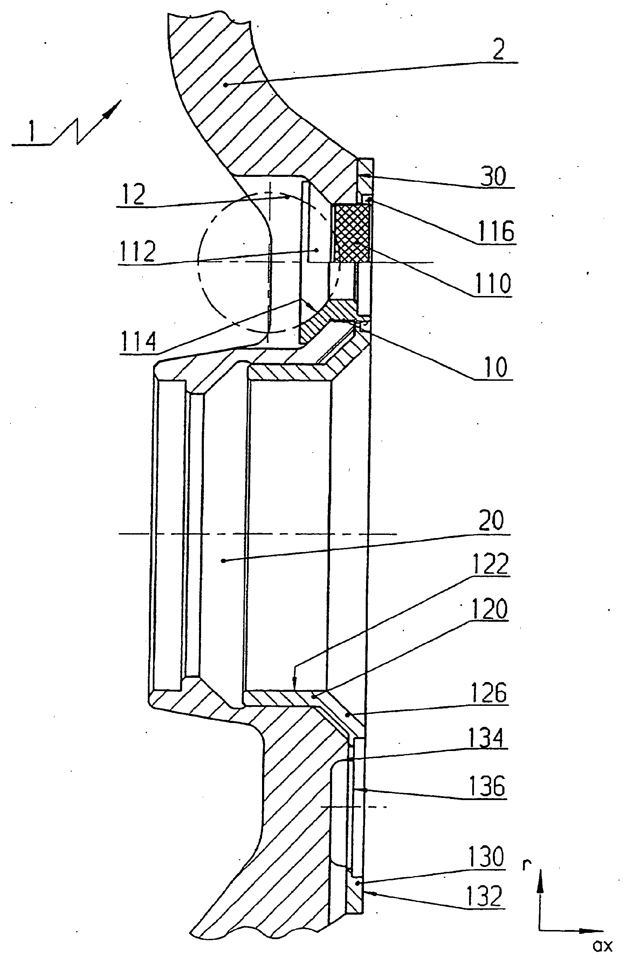

Die Erfindung wird nachstehend anhand des in der einzigen Figur schematisch dargestellten Ausführungsbeispiels erläutert. Es zeigt
- Fig. 1: Radausschnitt mit Abstandshaltern im Axialteilschnitt

Ein Rad 1 ist zumindest im Bereich einer Radschüssel bzw. in einem Zentralbereich 2 aus einer magnesiumhaltigen Legierung gefertigt.

Im Zentralbereich sind in an sich bekannter Weise Befestigungsbohrungen 10 für hier nicht näher dargestellte Radbefestigungsschrauben angebracht. Die Befestigungsbohrungen 10 sind bei diesem Ausführungsbeispiel im Bereich von Vertiefungen 12 angebracht, so daß die Befestigungsschrauben gegenüber dem Zentralbereich 12 versenkt sind.

Weiterhin ist eine Nabenbohrung 20 vorhanden, mit der das Rad 1 auf eine hier nicht dargestellte Nabe aufsetzbar ist und der Zentrierung dient.

Schließlich ist ein Anlagebereich 30 vorgesehen, mit dem das Rad 1 rückseitig mit einem korrespondierendem Bereich einer hier nicht dargestellten Bremsscheibe verbunden wird.

Zur Vermeidung von Kontaktkorrosion zwischen der Radschüssel 2, die aus magnesiumhaltiger Legierung besteht, und den genannten Bauteilen, wie Befestigungsschrauben, Nabe und Bremsscheibe, die in der Regel aus Stahl bestehen, sind nachstehend näher beschriebene Abstandshalter vorgesehen. Diese sind aus einer aluminiumhaltigen Legierung gefertigt, die selbst korrosionsbeständig ist und wegen ihres geringen spezifischen Gewichts zu keiner nennenswerten Erhöhung des Gesamtgewichts des Rades 1 beiträgt.

Der Anlagebereich 30 wird durch eine Distanzscheibe 130 abgedeckt, die im hier vorliegenden Ausführungsbeispiel in radialer Richtung r am Außenumfang mit dem Anlagebereich 30 bündig gestaltet ist.

In radialer Richtung r innenliegend geht die Distanzscheibe 130 in einen Übergangsabschnitt 126 über, der die Verbindung zu einer Distanzhülse 120 darstellt. Die Distanzhülse 120 ist in axialer Richtung ax in die Nabenbohrung 20 hineingeführt und stellt somit eine Zentrierfläche 122 für die hier nicht dargestellte Nabe dar.

Die Distanzscheibe 130 und die Distanzhülse 120 bilden somit ein einteiliges Bauteil, das im vorliegenden Ausführungsbeispiel einstückig ausgeführt ist. Ebenso ist es möglich, die Distanzscheibe 130 und die Distanzhülse 120 zunächst separat zu fertigen und anschließend zu einer Baueinheit zusammenzufügen. In jedem Falle ist sichergestellt, daß durch das Einschieben des die Distanzhülse 120 darstellenden Abschnitts in die Nabenbohrung 20 eine selbsttätige Zentrierung des die Distanzscheibe 130 darstellenden Abschnitts erfolgt. Das Bauteil wird soweit in die Nabenbohrung 20 eingeschoben, bis die Distanzscheibe 130 am Anlagebereich 30 des Zentralbereichs 2 vollflächig anliegt. Die Kontaktfläche zur Bremsscheibe hin bildet demnach die als Anlagefläche 132 ausgebildete Stirnseite der Distanzscheibe 130.

Jede der Befestigungsbohrungen 10 wird durch eine Distanzbuchse 110 geschützt, die die Befestigungsbohrung 10 in axialer Richtung ax vollständig durchsetzt. Die Distanzbuchse 110 weist einen trichterförmigen Axialabschnitt 112 auf, in den ein sphärischer Anlagebereich 114 für die Radschraube eingearbeitet ist. In axialer Richtung ax stützt sich die Distanzbuchse 110 mit dem trichterförmigen Axialabschnitt 112 am Grund der Vertiefung 12 ab.

Korrespondierend zu den Befestigungsbohrungen 10 sind Durchgangsbohrungen 134 in der Distanzscheibe 130 eingearbeitet, in welche die Distanzbuchsen 110 in axialer Richtung ax hineinragen.

Eine Besonderheit des dargestellten Ausführungsbeispiels besteht nun darin, daß die Distanzbuchse 110 einen Bördelrand 116 aufweist, mit dem die Distanzscheibe 130 unverlierbar an der Radschüssel 2 befestigbar ist. Hierzu ist an der Distanzscheibe 130 jeweils im Bereich der Durchgangsbohrung 134 ein Absatz 136 angebracht, der den aufgebördelten Abschnitt des Bördelrands 116 aufnimmt. Auf diese Weise ist sichergestellt, daß die Distanzbuchse 110 in axialer Richtung ax nicht über die als Anlagefläche 133 dienende Stirnseite hinausragt.

Für eine optimale Vormontage ist es von Vorteil, wenn die Distanzbuchsen 110 in die Befestigungsbohrungen 10 eingepreßt, d.h. als Einpreßbuchsen ausgeführt sind. Das flanschartige Bauteil mit der Distanzscheibe 130 und der Distanzhülse 120 kann dann von der Radinnenseite her auf die Distanzbuchsen 110 aufgesteckt werden. Die formschlüssige Verbindung wird dann durch Umbördeln der Bördelränder 116 hergestellt. Es entsteht damit ein Verbund der als Abstandshalter dienenden Bauteile, nämlich Distanzbuchsen 110, Distanzhülse 120 und Distanzscheibe 130, der unverlierbar an dem Rad 1 bzw. der Radschüssel 2 befestigt ist. Bei der Montage bzw. Demontage des Rades 1 ergeben sich in der Handhabung keine Unterschiede zu herkömmlichen Leichtmetallrädern.

### Bezugszeichenliste

- 1: Rad
- 2: Radschüssel, Zentralbereich

- 10: Befestigungsbohrung
- 12: Vertiefung
- 20: Nabenbohrung
- 30: Anlagebereich

- 110: Distanzbuchse
- 112: trichterförmiger Axialabschnitt
- 114: sphärischer Anlagebereich
- 116: Bördelrand

- 120: Distanzhülse
- 121: Zentrierfläche
- 126: Übergangsabschnitt

- 130: Distanzscheibe
- 132: Anlagefläche
- 134: Durchgangsbohrung
- 136: Absatz

## Patentansprüche

1. Rad für ein Kraftfahrzeug aus einer magnesiumhaltigen Legierung, mit einer Radschüssel (2), die einen Zentralbereich aufweist, in dem Befestigungsbohrungen (10) für Befestigungsbolzen sowie eine Nabenbohrung (20) angeordnet sind, und der einen rückseitigen, ringförmigen Anlagebereich (30) zur Anbindung an eine Bremsscheibe besitzt, wobei die Nabenbohrung (20) und der Anlagebereich (30) mit Abstandshaltern (120, 130) versehen sind, die wenigstens eine Distanzscheibe (130) am Anlagebereich (30) und eine Distanzhülse (120), die die Nabenbohrung (20) in axialer Richtung (ax) zumindest teilweise durchsetzt, umfassen und die aus einer aluminiumhaltigen Legierung bestehen,
**dadurch gekennzeichnet,**
- **dass** die Befestigungsbohrungen (10) mit weiteren, aus einer aluminiumhaltigen Legierung bestehenden Abstandshaltern (110) versehen sind, und
- **dass** die Distanzhülse (120) und die Distanzscheibe (130) als einteiliges, vorzugsweise einstückiges, flanschartiges Bauteil gestaltet sind.

2. Rad nach Anspruch 1,
**dadurch gekennzeichnet, dass**
die Abstandshalter (110, 120, 130) unverlierbar an der Radschüssel bzw. am Zentralbereich (2) befestigt sind.

3. Rad nach einem der vorstehenden Ansprüche,
**dadurch gekennzeichnet, dass**
als weitere Abstandshalter Distanzbuchsen (110) vorgesehen sind, die die Befestigungsbohrungen (10) in axialer Richtung (ax) durchsetzen.

4. Rad nach Anspruch 3,
**dadurch gekennzeichnet, dass**
die Distanzbuchsen (110) als Einpreßbuchsen ausgeführt und in die Befestigungsbohrungen (10) eingepreßt sind.

5. Rad nach Anspruch 3 oder 4,
**dadurch gekennzeichnet, dass**
die Distanzscheibe (130) Durchgangsbohrungen (134) aufweist, durch die die Distanzbuchsen (110) hindurchgeführt und mit dieser verbunden sind.

6. Rad nach Anspruch 5,
**dadurch gekennzeichnet, dass**
die Distanzbuchsen (110) Bördelränder (116) zum Erstellen einer formschlüssigen Verbindung mit der Distanzscheibe (130) aufweisen.

## Claims

1. Wheel for a motor vehicle made from a magnesium-containing alloy, comprising a wheel disc (2) which has a central region in which there are arranged fixing holes (10) for fixing bolts and also a hub hole (20), and which has a rear annular bearing region (30) for attachment to a brake disc, wherein the hub hole (20) and the bearing region (30) are provided with spacers (120, 130) which comprise at least one spacer disc (130) on the bearing region (30) and a spacer sleeve (120) which at least partially passes through the hub hole (20) in the axial direction (ax), said spacers being made of an aluminium-containing alloy, **characterized**
- **in that** the fixing holes (10) are provided with further spacers (110) made of an aluminium-containing alloy, and
- **in that** the spacer sleeve (120) and the spacer disc (130) are configured as a flange-like component which is designed as a single part and is preferably integrally formed in one piece.

2. Wheel according to Claim 1, **characterized in that** the spacers (110, 120, 130) are captively fixed to the wheel disc or to the central region (2).

3. Wheel according to either of the preceding claims, **characterized in that** spacer bushings (110) are provided as further spacers, which spacer bushings pass through the fixing holes (10) in the axial direction (ax).

4. Wheel according to Claim 3, **characterized in that** the spacer bushings (110) are designed as press-in bushings and are pressed into the fixing holes (10).

5. Wheel according to Claim 3 or 4, **characterized in that** the spacer disc (130) has through-holes (134), through which the spacer bushings (110) are passed and are connected to said spacer disc.

6. Wheel according to Claim 5, **characterized in that** the spacer bushings (110) have flanged edges (116) for creating a form-fitting connection with the spacer disc (130).

## Revendications

1. Roue pour un véhicule automobile, constituée d'un alliage contenant du magnésium, comprenant un disque de roue (2) ayant une zone centrale avec des alésages de fixation (10) pour des boulons de fixation et avec un alésage de moyeu (20), et une zone d'appui (30) arrière annulaire destinée à être rattachée à un disque de frein, l'alésage du moyeu (20) et la zone d'appui (30) étant équipés d'entretoises (120, 130) constitués par au moins une rondelle entretoise (130) au niveau de la zone d'appui (30) et un tube entretoise (120) qui traverse au moins partiellement l'alésage du moyeu (20) dans la direction axiale (ax), et composées d'un alliage contenant de l'aluminium,
**caractérisée en ce que**
- les alésages de fixation (10) sont équipés d'autres entretoises (110) constituées d'un alliage contenant de l'aluminium, et
- le tube entretoise (120) et la rondelle entretoise (130) constituent un composant en une partie en forme de bride, de préférence d'une seule pièce.

2. Roue selon la revendication 1,
**caractérisée en ce que**
les entretoises (110, 120, 130) sont fixées de façon inamovible au disque de roue ou à la zone centrale (2).

3. Roue selon l'une des revendications précédentes,
**caractérisée en ce que**
comme autres entretoises, des douilles entretoises (110) traversent les alésages de fixation (10) dans la direction axiale (ax).

4. Roue selon la revendication 3,
**caractérisée en ce que**
les douilles entretoises (110) sont des douilles à emmanchement emmanchées dans les alésages de fixation (10).

5. Roue selon la revendication 3 ou 4,
**caractérisée en ce que**
la rondelle entretoise (130) présente des alésages traversants (134) à travers lesquels sont insérées les douilles entretoises (110) reliées à celle-ci.

6. Roue selon la revendication 5,
**caractérisée en ce que**
les douilles entretoises (110) présentent des bords bombés (116) pour réaliser une liaison par complémentarité de formes avec la rondelle entretoise (130).
